# EUROPÄISCHE PATENTANMELDUNG

(11) **EP 1 443 628 A2**
(43) Veröffentlichungstag der Anmeldung: **04.08.2004**
(21) Anmeldenummer: 04100235.3
(22) Anmeldetag: 23.01.2004
(51) Int. Cl.: H02K 3/40, H02K 3/14

(54) **Roebelstab für eine elektrische Maschine sowie Verfahren zum Herstellen eines solchen Roebelstabes**

(30) Priorität: 01.02.2003 DE 10304025
(71) Anmelder: Alstom Technology Ltd, 5400 Baden (CH)
(72) Erfinder: Baumann, Thomas, 5430, Wettingen (CH); Klee, Peter, 68309, Mannheim (DE)

(57) **Zusammenfassung**

Ein Roebelstab (10) für eine elektrische Maschine umfasst eine Mehrzahl von im wesentlichen parallel verlaufenden, transponierten Teilleitern (11, 12, 13), die über- und/oder nebeneinanderliegend einen Stab mit im wesentlichen rechteckigem Querschnitt bilden, der aussen mit einer Isolation (19) umgeben ist und zwischen der Isolation (19) und den Teilleitern (11, 12, 13) Mittel (14, 14'; 15, 15'; 17, 18) zur Ausbildung eines Innenglimmschutzes (IGS) aufweist.
Bei einem solchen Roebelstab wird ein besonders wirksamer Innenglimmschutz dadurch erreicht, dass die Innenglimmschutzmittel vorgeformte, abgewinkelte Profile (17, 18) aus einem elektrisch leitenden Material umfassen, welche in Längsrichtung des Roebelstabes (10) verlaufend die Kanten des aus den Teilleitern (11, 12, 13) gebildeten Stabes umschliessen, und auf welche die Isolation (19) aufgebracht ist.

## Beschreibung

### TECHNISCHES GEBIET

Die vorliegende Erfindung bezieht sich auf das Gebiet der elektrischen Maschinen. Sie betrifft einen Roebelstab für eine elektrische Maschine gemäss dem Oberbegriff des Anspruchs 1 sowie ein Verfahren zum Herstellen eines solchen Roebelstabes.

### STAND DER TECHNIK

Ein solcher Roebelstab ist z.B. aus der EP-A1-0 774 823 bzw. der US-A-5,760,516 bekannt.

Die Statorwicklungen von grossen elektrischen Maschinen umfassen in Nuten eingelegte Wicklungsstäbe, die aus einer Vielzahl von parallelen Teilleitern aufgebaut sind und einen im wesentlichen rechteckigen Querschnitt aufweisen, dessen schmale Seiten die Ober- und Unterseite des Stabes bilden. Die einzelnen Teilleiter der Wicklungsstäbe sind zur Unterdrückung von Teilleiterströmen auf eine spezielle Weise transponiert, d.h., wechseln über die Länge des Stabes ihre Plätze innerhalb des Stabes. Derartige Wicklungsstäbe sind unter der Bezeichnung "Roebelstäbe" seit langem bekannt.

Bedingt durch die dielektrische Inhomogenität auf der Stabschmalseite von Roebelstäben muss bei höheren Betriebsfeldstärken ein sog. Innenglimmschutz (IGS) verwendet werden, der die Aufgabe hat, diese Inhomogenitäten durch eine Äquipotentialfläche "abzudecken" und damit bezüglich dielektrischer Wirksamkeit zu neutralisieren.

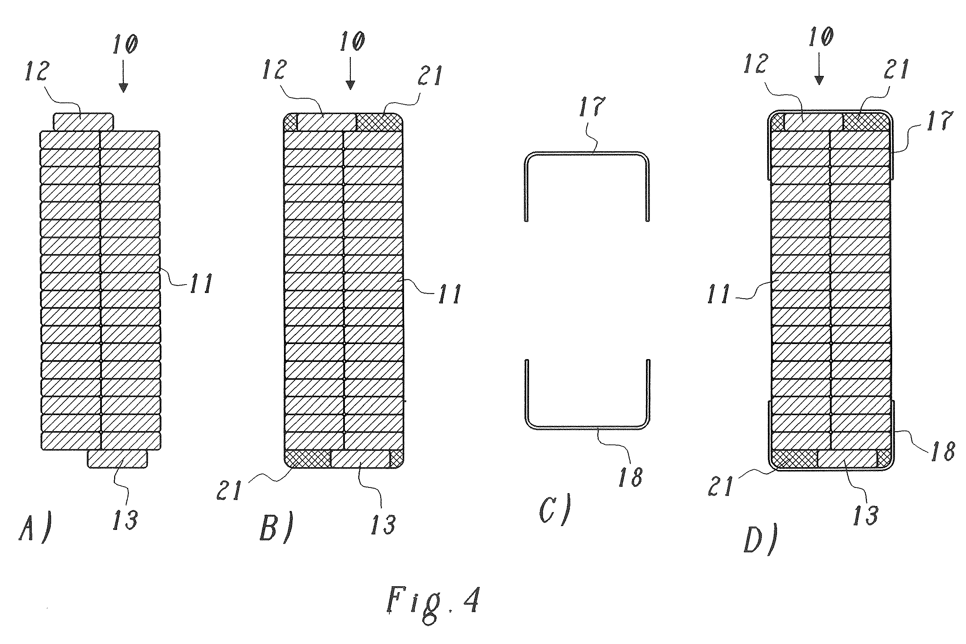

Es gibt dazu im Stand der Technik prinzipiell 2 Wege:
1. Indem man den kompletten Stab (und damit auch die kritischen Stabschmalseiten mit den Teilleitertranspositionsstellen) mit einem leitfähigen Material umbandelt - sog. "geschlossener" IGS (siehe dazu die Fig. 4 der US-A-6,420,812).
   Nachteile:
   Die Absatzkanten des Bandes (Überlappungsstellen) erzeugen dielektrische Inhomogenitäten, welche speziell im Bereich der Stabkanten (wo das elektrische Hintergrundsfeld sowieso schon etwa doppelt so hoch ist wie auf den Breitseiten) zu starken Feldüberhöhungen führen.
2. Indem man nur die kritischen Bereiche (also die Stabschmalseiten) mit leitfähigen Materialien (Hartglasgewebe HGW, Leitkitt) "abdeckt" und zusätzlich bei Bedarf einen definierten Kantenradius mechanisch erzeugt (Fräsen, Schleifen) (siehe dazu die eingangs genannte EP-A1-0 774 823).

### Nachteile:

Eine derartige mechanische Bearbeitung (zur Erzeugung eines definierten Radius) hat eine recht grosse Fertigungstoleranz, wodurch teilweise erhebliche Abweichungen vom beabsichtigten Radius entstehen. Die verwendeten Materialien (Leitkitt, insbesondere aber HGW) sind nicht homogen (Glasfasern), so dass durch die mechanische Bearbeitung zumindest im Mikrobereich extreme Inhomogenitäten vorliegen (abstehende Glasfasern, Ausbrüche, Lunker, etc.). Insgesamt ergibt sich daraus, dass das theoretische Potential zur Feldstärkenminimierung auch nicht annähernd ausgenutzt werden kann. So ergibt sich z.B. bei einer Erhöhung des Kantenradius von 0,5 -> 2,5 mm nur eine ausnutzbare Isolationsdickenreduktion von etwa 10%, obwohl das "theoretische Potential" um Faktoren höher sein müsste.

### DARSTELLUNG DER ERFINDUNG

Es ist daher Aufgabe der Erfindung, einen Roebelstab zu schaffen, welcher die aufgezählten Nachteile bekannter Stäbe vermeidet und sich insbesondere durch einen einfach und flexibel anwendbaren, besonders wirksamen Innenglimmschutz auszeichnet, sowie ein Verfahren zu seiner Herstellung anzugeben.

Die Aufgabe wird durch die Gesamtheit der Merkmale der Ansprüche 1 und 15 gelöst.

Ausgangspunkt der Erfindung war dabei, eine technische Lösung zu finden, die es erlaubt, das theoretische Potential zur Feldstärkenminimierung weitaus besser zu nutzen, indem man die technologisch inhärenten, dielektrisch wirksamen "Fehlstellen" am Kantenradius des Stabes minimiert.

Der Kern der Erfindung besteht nun darin, die Radien der Stabkanten nicht durch mechanisches Bearbeiten zu erzeugen, sondern indem man vorgefertigte, abgewinkelte, insbesondere U-förmige, Profile verwendet. Solche Profile können beispielsweise aus handelsüblichen elektrischen leitfähigen Prepregmaterialien im Heisspressverfahren als Endlosmaterial hergestellt werden. Bei einem Prepregmaterial handelt es sich um ein mit einem Harz-Härter-Gemisch vorimprägniertes Gewebe. Prepregmaterialien der genannten Art sind kommerziell beispielsweise unter der Bezeichnung PREPREG GGBE von der deutschen Firma August Krempel Soehne GmbH + Co, KG, Vaihingen, erhältlich.

Das Verfahren zur "endlosen" Profilherstellung ist bekannt und wird beispielsweise zur Herstellung von Rotor-Nutkanälen verwendet. Mittels Heisspressen lässt sich der beabsichtigte Radius in annähernd idealer Art technisch realisieren.

Eine weitere Möglichkeit wäre, solche Profile im Extrusionsverfahren mit elektrisch leitfähigen thermoplastischen oder elastomeren Werkstoffen herzustellen.

Eine dritte Möglichkeit wäre, solche Profile im Strangzieh- oder Pultrusionsverfahren mit elektrisch leitfähigen Prepregs herzustellen (solche Profile sind z.B. von der o.g. Firma Krempel unter dem Markennamen WACOSIT-R. erhältlich).

Durch Verwendung von Profilen, welche die gesamte Länge des geraden Teils des Roebelstabes abdecken, werden sämtliche mechanischen Diskontinuitäten (und somit zusätzliche elektrische Feldüberhöhungen) im Bereich der Stabkanten vermieden. Bei U-Profilen sind die Schenkel des Profils hinreichend lang zu wählen (typischerweise 5-10 mm), sodass die Absatzkanten der Profile auf den elektrisch weniger belasteten Breitseiten der Stäbe zu liegen kommen. Es ist prinzipiell auch möglich, die Schenkellänge so groß zu wählen, dass sich die beiden U-Profile in der Stabbreitenmitte überlappen.

Grundsätzlich ist es denkbar, jede der Kanten des Roebelstabes mit einem separaten, rechtwinkligen Profil abzudecken. Eine wegen der Einfachheit bevorzugte Ausgestaltung der Erfindung zeichnet sich jedoch dadurch aus, dass die Profile als zweifach abgewinkelte U-Profile ausgebildet sind und den aus den Teilleitern gebildeten Stab von gegenüberliegenden Seiten, insbesondere von den Schmalseiten, her umfassen. Mit nur zwei U-Profilen lassen sich so alle Kanten abdecken, wobei die U-Profile sich leicht und sicher auf den Stab aufstecken lassen.

Wie bereits erwähnt, können die vorgeformten Profile bzw. U-Profile entweder aus einem elektrisch leitfähigen Prepregmaterial durch ein Heisspressverfahren, oder aus einem elektrisch leitfähigen Prepregmaterial durch ein Strangziehverfahren, oder aus einem elektrisch leitfähigen thermoplastischen oder elastomeren Werkstoff durch ein Extrusionsverfahren hergestellt sein.

Da die volle Wirkung der Profile bereits bei sehr geringen Wandstärken erreicht wird, ist es vom Herstellungs- und Materialaufwand her vorteilhaft, wenn die Profile bzw. U-Profile eine Wanddicke von weniger als 1 mm, vorzugsweise zwischen 0,1 mm und 0,2 mm, aufweisen.

Als besonders günstig hat es sich herausgestellt, wenn die Profile bzw. U-Profile dabei in ihren abgewinkelten Bereichen einen Krümmungsradius von wenigen Millimetern, vorzugsweise im Bereich zwischen 0,5 mm und 2,5 mm, aufweisen, und wenn die Profile als zweifach abgewinkelte U-Profile mit Schenkeln ausgebildet sind, die eine Länge von einigen Millimetern, vorzugsweise etwa 5-10 mm, aufweisen.

Es gibt im Rahmen der Erfindung verschiedene Möglichkeiten, den Roebelstab für die Aufnahme der Profile vorzubereiten. Eine Möglichkeit ist dadurch gekennzeichnet, dass der Roebelstab unterhalb der Profile bzw. U-Profile mit Leitkitt und aufgelegten Streifen aus Hartglasgewebe versehen ist, wobei insbesondere die Profile bzw. U-Profile lose aufgesetzt sind, und die unterhalb der Profile bzw. U-Profile liegenden Kanten durch Bearbeitung abgerundet sind.

Es ist aber auch denkbar, dass die Profile bzw. U-Profile mit dem Leitkitt und den aufgelegten Streifen durch Heisspressen verbunden sind.

Eine andere Möglichkeit besteht darin, dass der Roebelstab unterhalb der Profile bzw. U-Profile mit elektrisch leitfähigem Prepregmaterial versehen ist, und dass die Profile bzw. U-Profile mit dem Prepregmaterial durch Heisspressen verbunden sind.

Eine weitere Möglichkeit besteht darin, dass die Profile bzw. U-Profile auf den durch die Teilleiter gebildeten, heissgepressten Stab lose aufgesetzt sind.

Es ist aber auch denkbar, dass der aus den Teilleitern gebildete Stab mit einem elektrisch leitfähigen Band umwickelt ist, und dass die Profile bzw. U-Profile auf den umwickelten Stab lose aufgesetzt sind.

Eine bevorzugte Ausgestaltung des erfindungsgemässen Verfahrens zeichnet sich dadurch aus, dass die Profile bzw. die U-Profile auf den Stab lose aufgesetzt bzw. aufgesteckt werden, wobei vor dem Aufsetzen bzw. Aufstecken der Profile bzw. U-Profile der Stab mit Leitkitt und aufgelegten Streifen aus Hartglasgewebe heissverpresst und die Kanten durch Bearbeitung abgerundet werden, oder der Stab mit einem leitfähigen Band umwickelt wird.

Eine andere bevorzugte Ausgestaltung des erfindungsgemässen Verfahrens zeichnet sich dadurch aus, dass die Profile bzw. die U-Profile mit dem Stab heissverpresst werden, wobei zum Heissverpressen zwischen den Profilen bzw. U-Profilen und dem Stab Leitkitt und Streifen aus Hartglasgewebe oder elektrisch leitendes Prepregmaterial angeordnet werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:

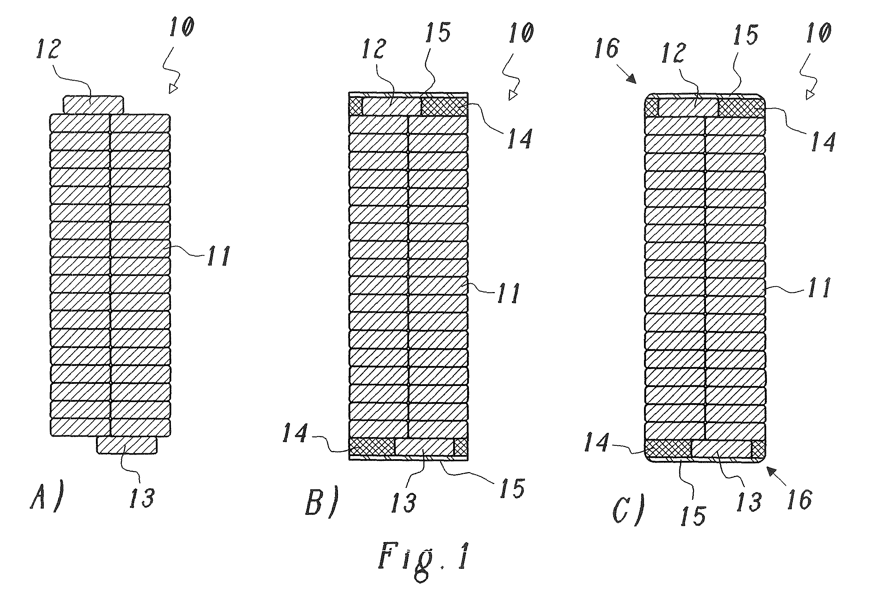

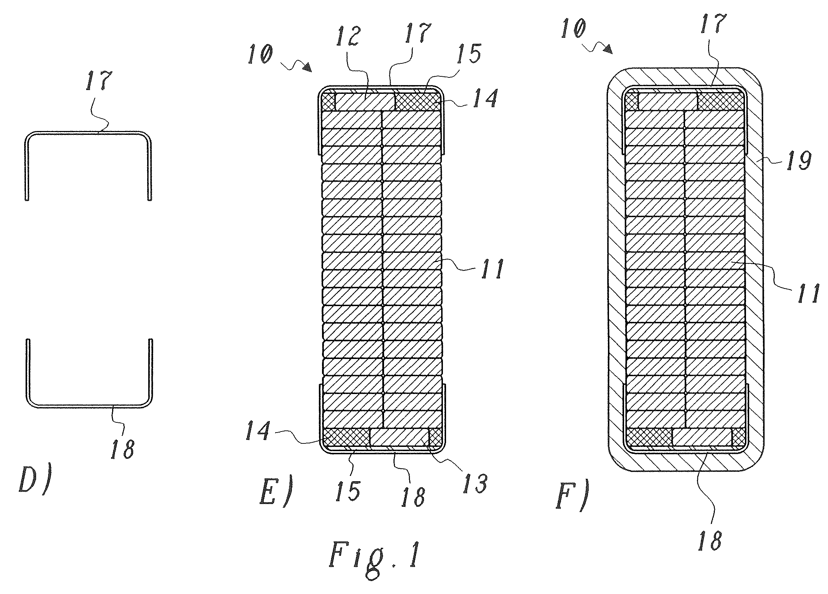

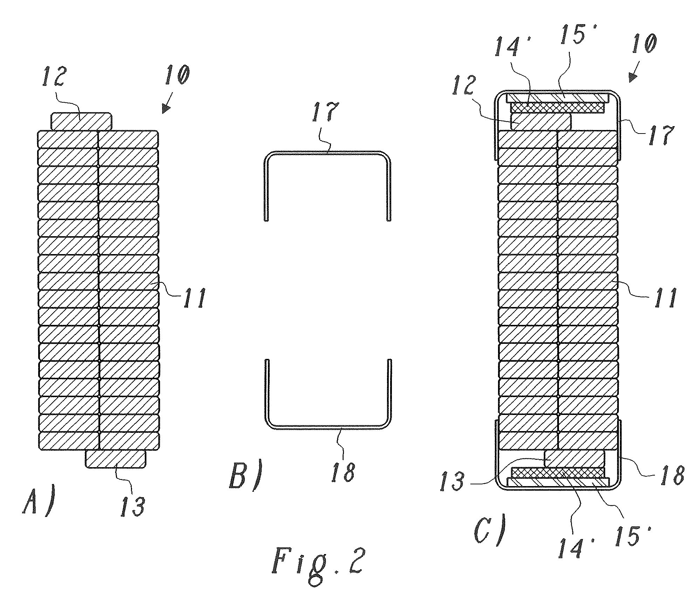

- Fig. 1: in verschiedenen Teilfiguren 1A bis 1 F in einer Querschnittsdarstellung verschiedene Schritte bei der Herstellung eines Roebelstabes gemäss einem ersten bevorzugten Ausführungsbeispiel der Erfindung mit lose aufgesetzten U-Profilen zur Abdeckung der vorher rund bearbeiteten Stabkanten;

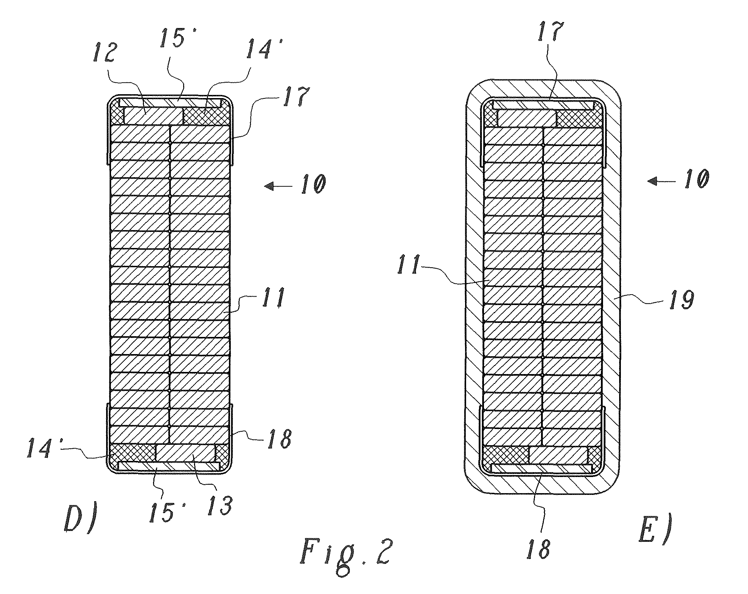

- Fig. 2: in verschiedenen Teilfiguren 2A bis 2E in einer zu Fig. 1 vergleichbaren Darstellung verschiedene Schritte bei der Herstellung eines Roebelstabes gemäss einem zweiten bevorzugten Ausführungsbeispiel der Erfindung mit heiss verpressten U-Profilen unter Verwendung von Leitkitt und HGW-Streifen;

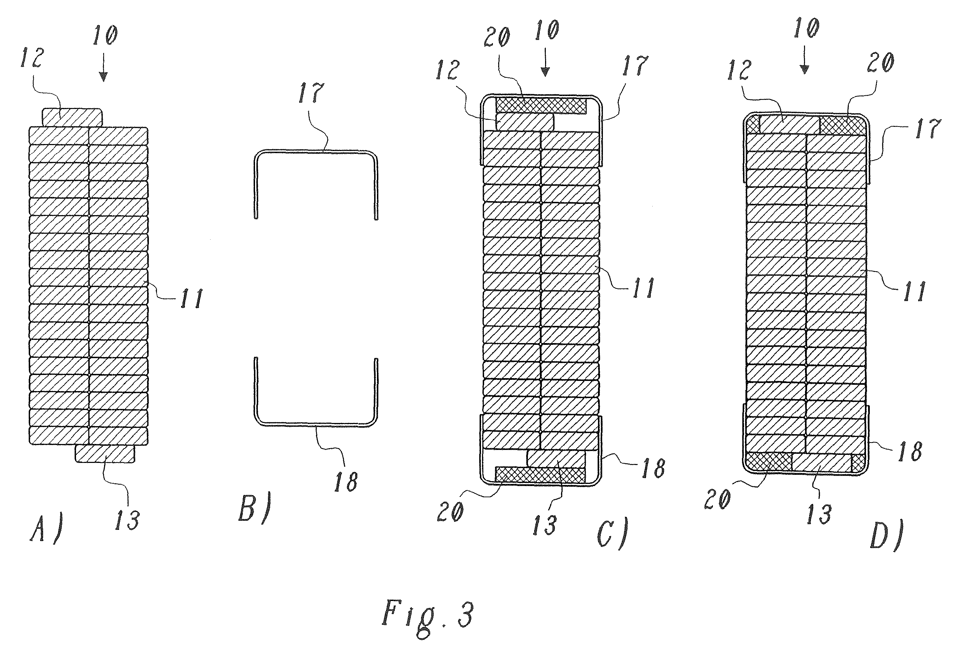

- Fig. 3: in verschiedenen Teilfiguren 3A bis 3D in einer zu Fig. 1 vergleichbaren Darstellung verschiedene Schritte bei der Herstellung eines Roebelstabes gemäss einem dritten bevorzugten Ausführungsbeispiel der Erfindung mit heiss verpressten U-Profilen unter Verwendung von elektrisch leitfähigen Prepregmaterialien;
- Fig. 4: in verschiedenen Teilfiguren 4A bis 4D in einer zu Fig. 1 vergleichbaren Darstellung verschiedene Schritte bei der Herstellung eines Roebelstabes gemäss einem vierten bevorzugten Ausführungsbeispiel der Erfindung mit auf den verbackenen Stab lose aufgesetzten U-Profilen; und

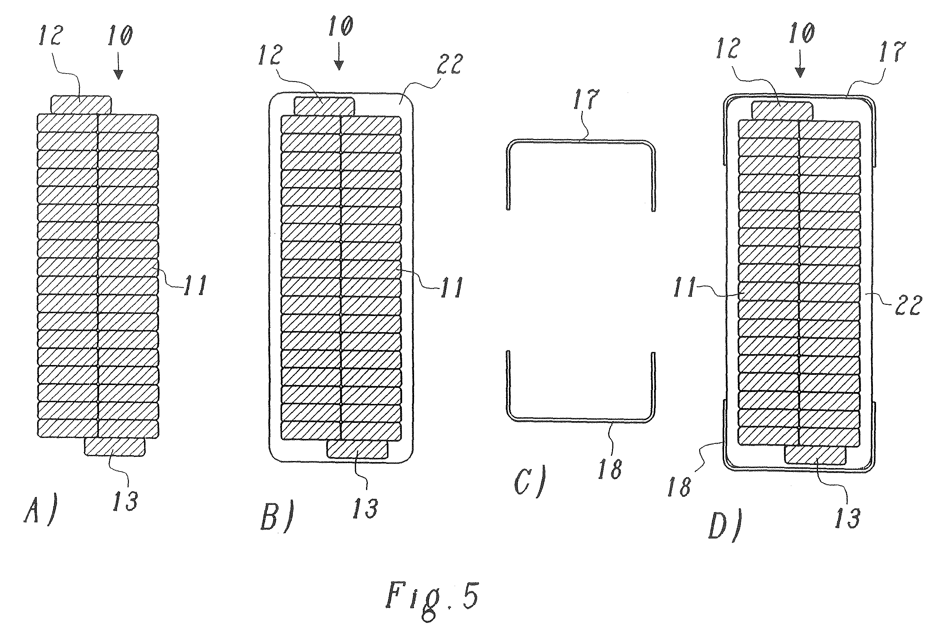

- Fig. 5: in verschiedenen Teilfiguren 5A bis 5D in einer zu Fig. 1 vergleichbaren Darstellung verschiedene Schritte bei der Herstellung eines Roebelstabes gemäss einem fünften bevorzugten Ausführungsbeispiel der Erfindung, bei der der Stab vor dem Aufsetzen der U-Profile mit leitfähigem Band umwickelt wird.

### WEGE ZUR AUSFÜHRUNG DER ERFINDUNG

In Fig. 1 sind in mehreren Teilfiguren 1A bis 1F in einer Querschnittsdarstellung verschiedene Schritte bei der Herstellung eines Roebelstabes gemäss einem ersten bevorzugten Ausführungsbeispiel der Erfindung wiedergegeben. Ausgegangen wird von einem Roebelstab 10, der aus einer Vielzahl von Teilleitern 11, 12 und 13 gebildet wird, die in der für die Verroebelung üblichen Weise transponiert sind. Die Transposition ist erkennbar an den ausserhalb der beiden Teilleiterstapel verlaufenden Teilleiter 12 und 13 auf den oben und unten liegenden Schmalseiten des Roebelstabes 10 (Fig. 1A).

Die durch die Verroebelung entstehenden Unregelmässigkeiten auf den Schmalseiten des Stabes werden nun - wie in der eingangs genannten EP-A1-0 774 823 beschrieben - gemäss Fig. 1 B mittels Leitkitt 14 und darübergelegten leitfähigen Streifen 15 durch Heissverpressen ausgeglichen. Als Leitkitt kann beispielsweise das Füllmaterial "ERKITT" der Firma Krempel verwendet werden. Beim heissverpressten Stab (dem sog. "Grünstab") werden dann gemäss Fig. 1 C durch mechanisches Schleifen abgerundete Kanten 16 erzeugt. Der Krümmungsradius der abgerundeten Kanten 16 beträgt dann beispielsweise 2,5 mm.

Auf den so vorbereiteten Grünstab werden nun von den Schmalseiten her zwei U-Profile 17, 18 gemäss Fig. 1 D aufgesetzt (Fig. 1E). Die vor dem Isolieren aufgesetzten bzw. aufgesteckten U-Profile 17, 18 dienen nur dazu, den Radiusbereich an den Kanten sauber auszubilden, bzw. durch das mechanische Bearbeiten erzeugte Inhomogenitäten abzudecken. Der Grünstab mit den aufgesteckten U-Profilen 17, 18 kann dann in herkömmlicher Weise mit einer Isolation 19 versehen werden (Fig. 1 F).

Die U-Profile 17, 18 sind vorgeformte Profile, die aus einem elektrisch leitfähigen Prepregmaterial durch ein Heisspressverfahren oder aus einem elektrisch leitfähigen Prepregmaterial durch ein Strangziehverfahren oder aus einem elektrisch leitfähigen thermoplastischen Werkstoff durch ein Extrusionsverfahren hergestellt sind (denkbar ist auch der Einsatz von elektrisch leitfähigen elastomeren Werkstoffen wie z.B. Silikon, Viton@ oder dgl.). Sie haben eine Wanddicke von weniger als 1 mm, vorzugsweise zwischen 0,05 mm und 0,2 mm. Sie weisen in ihren abgewinkelten Bereichen einen Krümmungsradius von wenigen Millimetern, vorzugsweise im Bereich zwischen 0,5 mm und 2,5 mm, auf. Sie haben zwei Schenkel, die eine Länge von einigen Millimetern, vorzugsweise etwa 5-10 mm, aufweisen.

In Fig. 2 sind in verschiedenen Teilfiguren 2A bis 2E in einer zu Fig. 1 vergleichbaren Darstellung verschiedene Schritte bei der Herstellung eines Roebelstabes gemäss einem zweiten bevorzugten Ausführungsbeispiel der Erfindung dargestellt. Ausgegangen wird wiederum von einem Roebelstab 10 gemäss Fig. 2A, der mit dem Roebelstab aus Fig. 1A identisch ist. Anders als in dem Ausführungsbeispiel der Fig. 1 wird hier das Anbringen der U-Profile 17, 18 gemäss Fig. 2B in den Heisspressprozess des Grünstabes integriert.

Dazu werden gemäss Fig. 2C in die U-Profile 17, 18 jeweils leitfähige Streifen 15' aus HGW sowie Leitkitt 14' für die Füllung und Ankopplung eingelegt. Die Dicke der Streifen 15' entspricht in etwa dem Radius an den Kanten der U-Profile 17, 18. Die Gebilde 14', 15', 17, 18 werden vor dem Heisspressen auf den Grünstab aufgesetzt (Fig. 2C). Die Menge an Leitkitt 14' wird so dimensioniert, dass beim Heisspressen kein Kitt aus den Schenkelenden der U-Profile 17, 18 austritt. Der Grünstab mit den aufgesetzten U-Profilen 17, 18 wird dann heissverpresst (Fig. 2D) und kann dann wiederum mit einer Isolation 19 versehen werden (Fig. 2E).

In Fig. 3 sind in verschiedenen Teilfiguren 3A bis 3D in einer zu Fig. 1 vergleichbaren Darstellung verschiedene Schritte bei der Herstellung eines Roebelstabes gemäss einem dritten bevorzugten Ausführungsbeispiel der Erfindung wiedergegeben. Das Verfahren läuft ähnlich wie in Fig. 2, mit dem Unterschied, dass anstelle des Leitkitts 14' und des leitfähigen HGW-Streifens 15' nunmehr elektrisch leitfähiger Prepreg 20 in die U-Profile 17, 18 eingesetzt (Fig. 3C) und einschliesslich der U-Profile 17, 18 mit dem Stab heissverpresst wird. Nach dem Heissverpressen erfolgt das Isolieren wie in Fig. 1 F und Fig. 2E.

In Fig. 4 sind in verschiedenen Teilfiguren 4A bis 4D in einer zu Fig. 1 vergleichbaren Darstellung verschiedene Schritte bei der Herstellung eines Roebelstabes gemäss einem vierten bevorzugten Ausführungsbeispiel der Erfindung gezeigt. Hier wird zunächst der Grünstab ohne Kröpfstellenbeilage (mit Leitkitt 21) in der Heißpresse abgebacken (Fig. 4B), wobei nur geringer Druck auf die Teilleitersäule erforderlich ist, da kein Kitt eingepresst werden muss. Dies hat den weiteren Vorteil, dass auch bei größeren Teilleitertoleranzen ohne großen Druck auf ein definiertes Endmaß gepresst werden kann. Die U-Profile 17, 18 (Fig. 4C) werden erst vor dem Isolieren aufgesteckt (Fig. 4D). Das Isolieren erfolgt dann wie in Fig. 1 F oder 2E.

In Fig. 5 schliesslich sind in verschiedenen Teilfiguren 5A bis 5D in einer zu Fig. 1 vergleichbaren Darstellung verschiedene Schritte bei der Herstellung eines Roebelstabes gemäss einem fünften bevorzugten Ausführungsbeispiel der Erfindung dargestellt, welches ohne Heisspressen auskommt. Der Roebelstab 10 gemäss Fig. 5A wird zunächst in seinem Nutteil mit einem elektrisch leitfähigen Band 22 umwickelt und erhält so seine erforderliche Stabilität für den Transport zur Biegemaschine und zum Isolieren. Dann werden die U-Profile 17, 18 gemäss Fig. 5C aufgesteckt (Fig. 5D). Das Isolieren erfolgt dann wieder wie in Fig. 1 F oder 2E. Diese Verfahrensvariante kombiniert einen geschlossenen IGS (Band) mit einem sauberen Kantenradius (U-Profil).

### BEZUGSZEICHENLISTE

- 10: Roebelstab
- 11,12,13: Teilleiter
- 14,14': Leitkitt
- 15,15': Streifen (HGW)
- 16: abgerundete Kante
- 17,18: U-Profil
- 19: Isolation
- 20: Prepreg (leitfähig)
- 21: Leitkitt
- 22: Band (leitfähig)

## Patentansprüche

1. Roebelstab (10) für eine elektrische Maschine, welcher Roebelstab (10) eine Mehrzahl von im wesentlichen parallel verlaufenden, transponierten Teilleitern (11, 12, 13) umfasst, die über- und/oder nebeneinanderliegend einen Stab mit im wesentlichen rechteckigem Querschnitt bilden, der aussen mit einer Isolation (19) umgeben ist und zwischen der Isolation (19) und den Teilleitern (11, 12, 13) Mittel (14, 14'; 15, 15'; 17, 18) zur Ausbildung eines Innenglimmschutzes aufweist, **dadurch gekennzeichnet, dass** die Innenglimmschutzmittel vorgeformte, abgewinkelte Profile (17, 18) aus einem elektrisch leitenden Material umfassen, welche in Längsrichtung des Roebelstabes (10) verlaufend die Kanten des aus den Teilleitern (11, 12, 13) gebildeten Stabes umschliessen, und auf welche die Isolation (19) aufgebracht ist.

2. Roebelstab nach Anspruch 1, **dadurch gekennzeichnet, dass** die Profile als zweifach abgewinkelte U-Profile (17, 18) ausgebildet sind und den aus den Teilleitern (11, 12, 13) gebildeten Stab von gegenüberliegenden Seiten, insbesondere von den Schmalseiten, her umfassen.

3. Roebelstab nach Anspruch 1 oder 2, **dadurch gekennzeichnet, dass** die vorgeformten Profile bzw. U-Profile (17, 18) aus einem elektrisch leitfähigen Prepregmaterial durch ein Heisspressverfahren hergestellt sind.

4. Roebelstab nach Anspruch 1 oder 2, **dadurch gekennzeichnet, dass** die vorgeformten Profile bzw. U-Profile (17, 18) aus einem elektrisch leitfähigen Prepregmaterial durch ein Strangziehverfahren hergestellt sind.

5. Roebelstab nach Anspruch 1 oder 2, **dadurch gekennzeichnet, dass** die vorgeformten Profile bzw. U-Profile (17, 18) aus einem elektrisch leitfähigen thermoplastischen oder elastomeren Werkstoff durch ein Extrusionsverfahren hergestellt sind.

6. Roebelstab nach einem der Ansprüche 1 bis 5, **dadurch gekennzeichnet, dass** die Profile bzw. U-Profile (17, 18) eine Wanddicke von weniger als 1 mm, vorzugsweise zwischen 0,05 mm und 0,2 mm, aufweisen.

7. Roebelstab nach einem der Ansprüche 1 bis 6, **dadurch gekennzeichnet, dass** die Profile bzw. U-Profile (17, 18) in ihren abgewinkelten Bereichen einen Krümmungsradius von wenigen Millimetern, vorzugsweise im Bereich zwischen 0,5 mm und 2,5 mm, aufweisen.

8. Roebelstab nach einem der Ansprüche 1 bis 7, **dadurch gekennzeichnet, dass** die Profile als zweifach abgewinkelte U-Profile (17, 18) mit Schenkeln ausgebildet sind, die eine Länge von einigen Millimetern, vorzugsweise etwa 5-10 mm, aufweisen.

9. Roebelstab nach einem der Ansprüche 1 bis 8, **dadurch gekennzeichnet, dass** der Roebelstab (10) unterhalb der Profile bzw. U-Profile (17, 18) mit Leitkitt (14, 14') und aufgelegten Streifen (15, 15') aus Hartglasgewebe versehen ist.

10. Roebelstab nach Anspruch 9, **dadurch gekennzeichnet, dass** die Profile bzw. U-Profile (17, 18) lose aufgesetzt sind, und dass die unterhalb der Profile bzw. U-Profile (17, 18) liegenden Kanten durch Bearbeitung abgerundet sind.

11. Roebelstab nach Anspruch 9, **dadurch gekennzeichnet, dass** die Profile bzw. U-Profile (17, 18) mit dem Leitkitt (14') und den aufgelegten Streifen (15') durch Heisspressen verbunden sind.

12. Roebelstab nach einem der Ansprüche 1 bis 8, **dadurch gekennzeichnet, dass** der Roebelstab (10) unterhalb der Profile bzw. U-Profile (17, 18) mit elektrisch leitfähigem Prepregmaterial (20) versehen ist, und dass die Profile bzw. U-Profile (17, 18) mit dem Prepregmaterial (20) durch Heisspressen verbunden sind.

13. Roebelstab nach einem der Ansprüche 1 bis 8, **dadurch gekennzeichnet, dass** die Profile bzw. U-Profile (17, 18) auf den durch die Teilleiter (11, 12, 13) gebildeten, heissgepressten Stab lose aufgesetzt sind.

14. Roebelstab nach einem der Ansprüche 1 bis 8, **dadurch gekennzeichnet, dass** der aus den Teilleitern (11, 12, 13) gebildete Stab mit einem elektrisch leitfähigen Band (22) umwickelt ist, und dass die Profile bzw. U-Profile (17, 18) auf den umwickelten Stab lose aufgesetzt sind.

15. Verfahren zum Herstellen eines Roebelstabes nach Anspruch 1, **dadurch gekennzeichnet, dass** der aus den Teilleitern (11, 12, 13) gebildete Stab vor dem Aufbringen der den Stab umgebenden Isolation (19) an seinen Kanten mit vorgeformten, abgewinkelten Profilen, insbesondere in Form von U-Profilen (17, 18), abgedeckt wird.

16. Verfahren nach Anspruch 15, **dadurch gekennzeichnet, dass** die Profile bzw. die U-Profile (17, 18) auf den Stab lose aufgesetzt bzw. aufgesteckt werden.

17. Verfahren nach Anspruch 16, **dadurch gekennzeichnet, dass** vor dem Aufsetzen bzw. Aufstecken der Profile bzw. U-Profile (17, 18) der Stab mit Leitkitt (14) und aufgelegten Streifen (15) aus Hartglasgewebe heissverpresst und die Kanten durch Bearbeitung abgerundet werden.

18. Verfahren nach Anspruch 16, **dadurch gekennzeichnet, dass** vor dem Aufsetzen bzw. Aufstecken der Profile bzw. U-Profile (17, 18) der Stab mit einem leitfähigen Band (22) umwickelt wird.

19. Verfahren nach Anspruch 15, **dadurch gekennzeichnet, dass** die Profile bzw. die U-Profile (17, 18) mit dem Stab heissverpresst werden.

20. Verfahren nach Anspruch 19, **dadurch gekennzeichnet, dass** zum Heissverpressen zwischen den Profilen bzw. U-Profilen (17, 18) und dem Stab Leitkitt (14') und Streifen (15') aus Hartglasgewebe oder elektrisch leitendes Prepregmaterial (20) angeordnet werden.
